Europäisches Patentamt

European Patent Office

Office européen des brevets

(19)

(11) Veröffentlichungsnummer: **0 174 512**
**B1**

# (12) EUROPÄISCHE PATENTSCHRIFT

(45) Veröffentlichungstag der Patentschrift:
22.06.88

(51) Int. Cl.⁴: **H 01 F 5/04**

(21) Anmeldenummer: 85110160.0

(22) Anmeldetag: 13.08.85

(54) Verfahren zum elektrischen Verbinden einer Anschlussleitung mit einer auf einen Spulenkörper aufgebrachten Wicklung.

(30) Priorität: 27.08.84 DE 3431471

(43) Veröffentlichungstag der Anmeldung:
19.03.86 Patentblatt 86/12

(45) Bekanntmachung des Hinweises auf die Patenterteilung:
22.06.88 Patentblatt 88/25

(84) Benannte Vertragsstaaten:
CH DE FR GB IT LI NL SE

(56) Entgegenhaltungen:
DE - A - 2 320 865
DE - B - 2 758 700
US - A - 3 453 575
US - A - 4 105 965
US - A - 4 546 340

(73) Patentinhaber: Siemens Aktiengesellschaft Berlin und
München, Wittelsbacherplatz 2, D-8000 München 2 (DE)

(72) Erfinder: Finck, Albin, Dipl.-Ing. (FH),
Stefan-Krämer-Strasse 17, D-8702 Gerbrunn (DE)
Erfinder: Höchamer, Horst, Dipl.-Ing. (FH),
Schlossstrasse 8, D-8531 Sugenheim (DE)
Erfinder: Gleixner, Ronald, Dipl.-Ing. (FH),
Hübnerweg 21, D-8703 Ochsenfurt (DE)
Erfinder: Pieper, Wolfgang, Kirchbühlstrasse 4,
D-8700 Würzburg (DE)

## Beschreibung

Die Erfindung bezieht sich auf ein Verfahren zur Verbindung der Leitungsenden einer äusseren Anschlussleitung mit den Wicklungsenden einer auf einem Spulenkörper aufgebrachten Wicklung gemäss Oberbegriff des Anspruchs 1; ein derartiges Verfahren ist aus der US-A-4 546 340 bekannt.

Bei dem durch die US-A-4 546 340 bekannten Verfahren sind an dem einen Stirnflansch des Spulenkörpers radial überstehende Anschlussstifte befestigt, die von den Wicklungsenden der Spulenwicklung umwickelt und mit den abisolierten Enden der äusseren Anschlussleitung kontaktiert sind, die ihrerseits von einer Einlegenut am gegenüberliegenden anderen Stirnflansch her axial über den Spulenwickel zugeführt und dann tangential zu den Anschlussstiften umgebogen sind. Zur Abdeckung und Isolierung der radial überstehenden Anschlussstifte und der daran kontaktierten elektrischen Leitungen ist an dem einen Stirnflansch über ein Filmscharnier eine Abdeckkappe angeformt, die nach der Kontaktierung über die Anschlussstifte und die über die Spulenwicklung verlaufenden Leitungsenden sowie die Einlegenut am anderen Stirnflansch überschwenkbar und an diesem fixierbar ist.

Bei einem durch die US-A-4 105 985 bekannten Verfahren zur Kontaktierung zwischen den Wicklungsenden einer auf einen Spulenkörper zwischen seinen beiden Stirnflanschen eingebrachten Spulenwicklung und den abisolierten Enden einer äusseren Anschlussleitung werden zunächst in einem an dem einen Stirnflansch axial ausserhalb und radial oberhalb der eigentlichen Stirnflanschkontur fest angeformten Haltesteg abgewickelte Anschlussstifte vorgesehen, die mit einem axialen Stiftteil in dem Haltesteg befestigt sind und mit einem radial abgebogenen Stiftteil den Stirnflansch radial überragen; um diesen abgebogenen Stiftteil wird ein Wicklungsende umschlungen und angelötet; nachdem jeweils durch eine Durchführungsöffnung des Haltestegs die abisolierten Enden der äusseren Anschlussleitung axial bis über den Wickelkörper reichend durchgesteckt sind, werden die mit den Wicklungsenden kontaktierten Stiftteile parallel zu den abisolierten Enden hin umgebogen und mit diesen kontaktiert. Zur Abdeckung und Isolierung dieser Kontaktstellen wird dann axial von der anderen Stirnflanschseite her eine gesonderte Abdeckkappe übergestülpt, die den Wicklungskörper und die Kontaktstellen nach aussen abdeckt und mit axial vorstehenden Stiften am Haltesteg fixierbar ist.

Bei einem durch die DE-B-2 758 700 bekannten Spulenkörper ist an dem radial äusseren Rand des einen Stirnflansches eines Kunststoff-Spulenkerns ein über ein Scharniergelenk angeformter Schnappbügel mit einem axial verlaufenden Längsschnitt zur isolierenden und zugentlastenden Aufnahme der Leitungsenden der Erregerspule angeformt. Bei der Herstellung des Spulenkörpers werden nach dem Wickeln der Wicklung deren Leitungsenden vor dem Umschwenken des Schnappbügels axial hintereinander in den Längsschlitz eingedrückt und der Schnappbügel anschliessend mit den eingedrückten Leitungsenden der Erregerspule über die offene Seite der Erregerspule umgelegt und am äusseren Rand des anderen Stirnflansches verrastet. Über den derart komplettierten Spulenkörper wird ein mit einer randoffenen Längsöffnung versehenes Ständergehäuse eines Synchronkleinmotors übergesteckt. Der Schnappbügel ist derart ausgebildet, dass er mit einem über die äusseren Ränder der Stirnflansche radial überstehenden Stegteil in die Längsöffnung des Ständergehäuses eingreift und dadurch für die in dem Längsschlitz herausgeführten Leitungsenden eine isolierte und zugentlastete Durchführung bildet.

Schliesslich ist es durch eine offenkundige Vorbenutzung bekannt, zur elektrischen Anschlussverbindung zwischen den Wicklungsenden einer auf einen Spulenkörper aufgewickelten Wicklung und den Leitungsenden einer äusseren Anschlussleitung an einem der beiden Stirnflansche des Spulenkörpers mit ihrem Anschlussende radial über den äusseren Rand des Stirnflansches abstehende Anschlussstifte zu haltern, auf diese Anschlussstifte die zuvor mit Steckhülsen versehenen abisolierten Enden der Leitungsenden aufzustecken und anschliessend die Anschlussstifte mit den aufgesteckten Leitungsenden derart seitlich umzubiegen, dass die Verbindungsstellen zwischen die dazu radial über den von der eingebrachten Wicklung eingenommenen Raum hinaus verlängerten Stirnflansche mit hinreichend gewährleistetem Isolationsabstand zum übergesteckten Metall-Ständergehäuse des Motors zu liegen kommen.

Aufgabe der vorliegenden Erfindung ist es, die Kontaktierung zwischen den Wicklungsenden der auf den Spulenkörper aufgewickelten Wicklung und den Leitungsenden der äusseren Anschlussleitung, insbesondere hinsichtlich einer automatengerechten Herstellungs- und Montagemöglichkeit, zu vereinfachen, ohne das Volumen bzw. den notwendigen Einbauraum des komplettierten Spulenkörpers mit der isoliert und zugentlastet herausführbaren äusseren Anschlussleitung vergrössern zu müssen.

Die Lösung dieser Aufgabe ist bei einem Verfahren der eingangs genannten Art durch die erfinderische Lehre des Anspruchs 1 möglich; vorteilhafte Ausgestaltungen dieser Erfindung sind jeweils Gegenstand der Unteransprüche.

Beim erfindungsgemässen Verfahren kann der Verschaltungsraum zwischen den Wicklungsenden einerseits und den Leitungsenden andererseits in den Bereich des zur isolierten Durchführung der Leitungen durch das Ständergehäuse an sich notwendigen und bekannten Isolierstückes selbst verlegt und somit aus dem Spulenkörperraum zwischen den Strinflanschen herausgenommen werden; durch das Umbiegen der kontaktierten Anschlussstifte ergibt sich die Möglichkeit eines zusätzlich verminderten Einbauraums oder bei gleichbleibenden Motorabmessungen die Vergrösserung der Motorleistung, ohne dass auf die Gewährleistung einer hinreichenden isolierenden Durchführung und Zugentlastung verzichtet werden muss. Dabei eignet sich die weiter unten beschriebene Konstruktion eines Spulenkörpers insbesondere auch für eine automatengerechte Fertigung, da die am Stirnflansch gehaltenen und radial überstehenden Anschlussstifte für einen die Wicklung einbringenden Wicklungsautomaten zum Anschluss der Wicklungsenden sowie zur Kontaktierung der Leitungsenden der äusseren Anschlussleitung frei und leicht zugänglich sind und die anschliessend abgebogenen Anschlussstifte mit ihren angeschlossenen Leitungs- bzw. Wicklungsenden durch einfaches Überstecken des Isolierstückes trotz geringer radialer Erstreckung sicher isoliert und durch Festklemmen in den Schlitzöffnungen hinreichend zugentlastet gehalten werden können.

Dabei kann gleichzeitig auf eine hinsichtlich der notwendigen Bauteile und Montageschritte vorteilhafte Vereinfachung dadurch zurückgegriffen werden, dass die Anschlussstifte an dem einen Stirnflansch und das Isolierstück als Schwenkklappe axial gegenüberliegend an dem anderen Stirnflansch derart angeformt sind, dass die vorteilhaft noch nicht mit Leitungsteilen zu bestückende Schwenkklappe zunächst den Wickelraum des Spulenkörpers freigebend nach aussen wegschwenkbar und nach Einbringen der Wicklung und dem Anschluss der Wicklungsenden sowie der Leitungsenden an die Anschlussstifte über diese isolierend und festklemmend überschwenkbar und in dieser Überschwenklage insbesondere durch einen Rastverschluss am gegenüberliegenden Stirnflansch, arretierbar ist.

Zur besonders einfachen Kontaktierung zwischen den Wicklungsenden bzw. den Leitungsenden einerseits und den Anschlussstiften anderseits ist nach einer Ausgestaltung der Erfindung vorgesehen, dass zunächst die Wicklungsenden um die Anschlussstifte gewickelt und gegebenenfalls angelötet sowie die Leitungsenden mit ihrem abisolierten Ende von axial aussen in radialer Richtung parallel zu den Anschlussstiften an diese herangeführt und durch Fluxen und Löten bzw. Pressschweissen mit den Anschlussstiften verbunden werden.

Die Erfindung sowie weitere vorteilhafte Ausgestaltungen werden im folgenden anhand eines schematisch dargestellten Ausführungsbeispiels in der Zeichnung näher erläutert. Darin zeigen:

Fig. 1 eine Draufsicht auf die mit Anschlussstiften versehene Stirnseite eines komplettierten Spulenkörpers,

Fig. 2 den in Fig. 1 dargestellten Spulenkörper mit eingebrachter und an die Anschlussstifte angeschlossener Wicklung jedoch noch ohne angeschlossene äussere Anschlussleitung,

Fig. 3 im Schnittbild einen Spulenkörper mit lediglich eingewickelter und an die Anschlussstifte angeschlossener Wicklung,

Fig. 4 im Schnittbild einen Spulenkörper mit an die Anschlussstifte angeschlossenen Wicklungsenden der Wicklung und Leitungsenden der äusseren Anschlussleitung,

Fig. 5 den komplettierten Spulenkörper im Schnittbild gemäss Schnittverlauf V–V in Fig. 1.

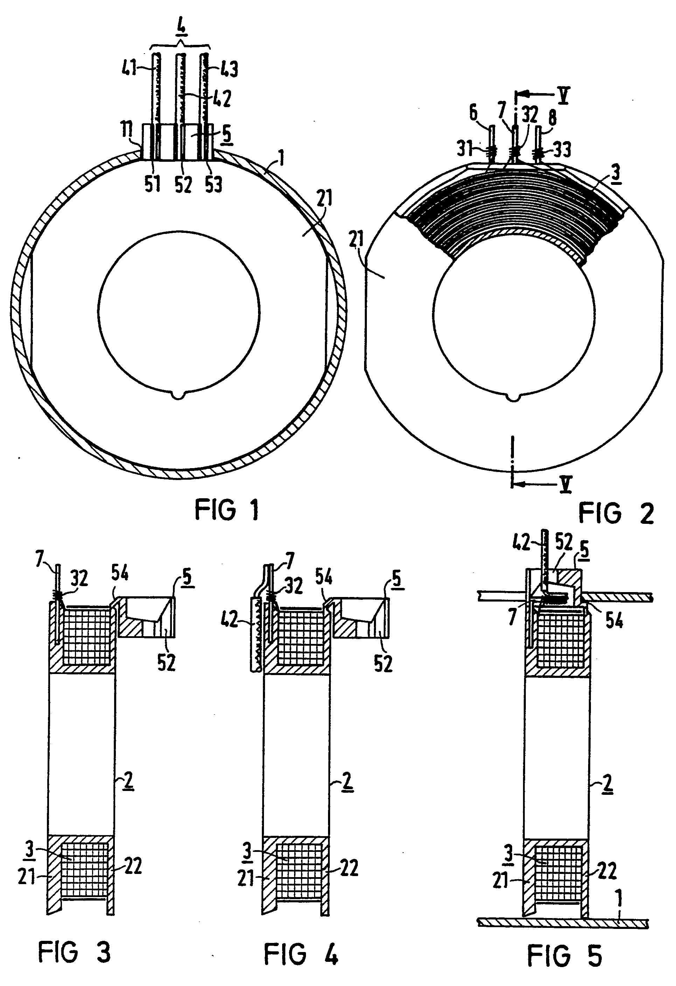

Der ringförmige, aus Kunststoff einstückig spritzgegossene Spulenkörper 2 begrenzt axial mit seinen beiden umlaufenden Stirnflanschen 21, 22 einen Wickelraum, in den eine Wicklung, insbesondere eine Erregerwicklung für einen Synchronkleinmotor, eingewickelt ist. In den einen Stirnflansch 21 sind Anschlussstifte 6, 7, 8 eingespritzt, die – gemäss Fig. 1 bis Fig. 4 – zunächst mit einem freien Anschlussende den Aussenrand des Stirnflansches 21 radial um einen bestimmten Abstand überragen.

Wie aus Fig. 2 ersichtlich, sind beim Wickeln der Wicklung 3 die durch ihre Anordnung in vorteilhafter Weise gut für einen Wickelautomaten – und gegebenenfalls für ein Tauchlötbad – zugänglichen Anschlussstifte 6, 7, 8 von den Wicklungsenden 31, 32, 33 der Wicklung 3 umschlungen. Im vorliegenden Fall ist am Anschlussstift 7 das Ende der einen und der Anfang der anderen Wicklung ohne Unterbrechung durchgewickelt.

Zur vorteilhaften automatengerechten Kontaktierung der Leitungsenden 41, 42, 43 der äusseren Anschlussleitung 4 sind – wie insbesondere aus Fig. 4 ersichtlich – jeweils das abisolierte Ende eines Leitungsendes von radial innen nach radial aussen gerichtet sowie von axial aussen anliegend an die Anschlussstifte herangeführt und mit diesen ähnlich wie die umwickelten Wicklungsenden der Wicklung 3 durch Verlöten bzw. Pressschweissen verbunden. Wie aus Fig. 5 ersichtlich, sind die derart mit den Wicklungsenden und Leitungsenden kontaktierten, in dem einen Stirnflansch 21 gehaltenen Anschlussstifte mit ihren freien Anschlussenden auf den anderen Stirnflansch 22 derart zugebogen, dass das freie Anschlussende radial ausserhalb des durch die radialen Aussenränder der Stirnflansche 21, 22 begrenzten Wickelraums des Spulenkörpers zu liegen kommen.

Zur zugentlasteten und isolierten Halterung bzw. Durchführung der Leitungsenden 41, 42, 43 durch eine axiale Schlitzöffnung 11 des über den komplettierten Spulenkörper übergesteckten Motorgehäuses 1 ist an den äusseren Rand des Stirnflansches 22 des Spulenkörpers 2 über ein Scharniergelenk 54 eine Schwenkklappe 5 einstückig mit angespritzt, die zunächst während der Kontaktierung der Wicklungsenden und Leitungsenden an die Anschlussstifte vom Wickelraum nach rechts aussen wegschwenkbar und nach dem Anschluss der Wicklungs- und Leitungsenden an die Anschlussstifte und deren Umbiegen über den Wickelraum schwenkbar und an dem gegenüberliegenden, die Anschlussstifte 6, 7, 8 aufnehmenden Stirnflansch fixierbar ist. Die Schwenkklappe 5 weist Schlitzöffnungen 51, 52, 53 mit einer derartigen lichten Weite auf, dass beim Überschwenken der Schwenkklappe 5 die Leitungsenden 41, 42, 43, insbesondere im Bereich oberhalb ihrer abisolierten Endstücke, zugentlastet einklemmbar sind.

Es versteht sich von selbst, dass die Länge der freien Anschlussenden der Anschlussstifte 6, 7, 8 bzw. der Grad des Einbiegewinkels der freien Enden bzw. die radiale Höhe der die Schlitzöffnungen 51, 52, 53 seitlich begrenzenden Wände derart zu wählen ist, dass allseitig ein hinreichender Isolationsabstand für die Anschlussstifte und die angeschlossenen abisolierten Wicklungs- bzw. Leitungsenden nach aussen gegeben und ein zugentlastetes Einklemmen der Leitungsenden, insbesondere oberhalb ihres abisolierten Endes, sicher möglich ist.

**Patentansprüche**

1. Verfahren zur Verbindung der Leitungsenden (41, 42, 43) einer äusseren Anschlussleitung (4) mit den Wicklungsenden (31, 32, 33) einer auf einen Spulenkörper (2) zwischen seinen beiden Stirnflanschen (21, 22) aufgebrachten Wicklung (3) einer Spule, wobei die Wicklungsenden (31, 32, 33) und die Leitungsenden (41, 42, 43) jeweils mit einem abisolierten Ende an mittels eines Stirnflansches gehalterte, radial überstehende Anschlussstifte (6, 7, 8) angeschlossen und anschliessend durch Überklappen einer an einem Stirnflansch gehalterten Schwenkklappe (5) isolierend abgedeckt und zugentlastet fixiert werden, dadurch gekennzeichnet, dass die Leitungsenden (41, 42, 43) jeweils mit ihrem abisolierten Ende nach radial aussen gerichtet parallel zu einem der radial über den einen Stirnflansch (21) überstehenden Anschlussstifte (6, 7, 8) mit diesen kontaktiert, dann die Anschlussstifte (6, 7, 8) mit den kontaktierten, abisolierten Enden der Leitungsenden (41, 42, 43) axial auf den gegenüberliegenden anderen Stirnflansch (22) zu eingebogen und beim Überklappen der an dem anderen Stirnflansch (22) gehalterten Schwenkklappe (5) die Leitungsenden (41, 42, 43), insbesondere oberhalb ihres kontaktierten Endteils, in axial offene Schlitzöffnungen (51, 52, 53) der Schwenkklappe (5) zugentlastet festgeklemmt werden.

2. Verfahren nach Anspruch 1, dadurch gekennzeichnet, dass die Wicklungsenden (31, 32, 33) um die Anschlussstifte (6, 7, 8) umwickelt und die Leitungsenden (41, 42, 43) jeweils mit einem abisolierten Ende parallel und axial aussen zum jeweiligen Anschlussstift (6, 7, 8) mit diesen kontaktiert werden.

3. Verfahren nach Anspruch 1 und/oder 2, dadurch gekennzeichnet, dass die Wicklungsenden (31, 32, 33) und Leitungsenden (41, 42, 43) mit den Anschlussstiften (6, 7, 8) verlötet werden.

4. Verfahren nach Anspruch 1 und/oder 2, dadurch gekennzeichnet, dass die Wicklungsenden (31, 32, 33) und die Leitungsenden (41, 42, 43) durch Pressschweissen mit den Anschlussstiften (6, 7, 8) verbunden werden.

**Claims**

1. Method for connecting the conductor ends (41, 42, 43) of an external connecting lead (4) to the winding ends (31, 32, 33) of a winding (3) of a coil, applied to a bobbin (2) between its two side flanges (21, 22), stripped ends of the winding ends (31, 32, 33) and the conductor ends (41, 42, 43) being respectively connected to connection pins (6, 7, 8), mounted by means of one side flange and protruding radially, and being then insulatingly covered and secured, nontensioned, by the folding over of a swivel cover (5) mounted on one side flange, characterised in that the conductor ends (41, 42, 43), in each case with their stripped end directed radially outwards and parallel to one of the connection pins (6, 7, 8) protruding radially beyond one side flange (21), are contacted with said connection pins, then the connection pins (6, 7, 8) with the contacted, stripped ends of the conductor ends (41, 42, 43) are deflected towards the other end flange (22) lying opposite until axial and by folding over the swivel cover (5) mounted on the other side flange (22), the conductor ends (41, 42, 43), particularly above their contacted end section, are firmly clamped, nontensioned, in axially open slot openings (51, 52, 53) of the swivel cover (5).

2. Method according to claim 1, characterised in that the winding ends (31, 32, 33) are wound round the connection pins (6, 7, 8) and in each case one stripped end, parallel to and on the axially outer side of the respective connection pin (6, 7, 8), is contacted with the latter.

3. Method according to claim 1 and/or 2, characterised in that the winding ends (31, 32, 33) and conductor ends (41, 42, 43) are soldered to the connection pins (6, 7, 8).

4. Method according to claim 1 and/or 2, characterised in that the winding ends (31, 32, 33) and the conductor ends (41, 42, 43) are connected by pressure welding to the connection pins (6, 7, 8).

**Revendications**

1. Procédé pour raccorder les extrémités (41, 42, 43) d'une ligne extérieure de raccordement (4) aux extrémités (31, 32, 33) d'un enroulement (3) d'une bobine, monté sur un corps de bobine (2) entre ces deux brides frontales (21, 22), et selon lequel on raccorde les extrémités (31, 32, 33) de la ligne, dont les pointes finales respectives sont dénudées, à des broches de raccordement (6, 7, 8) qui font saillie radialement et sont maintenues au moyen d'une bride frontale, et on recouvre ensuite lesdites extrémités, de manière à les isoler, et on les fixe, de manière à ce qu'elles soient déchargées de toute traction, par rabattement d'un capot basculant (5) retenu sur une bride frontale, caractérisé par le fait qu'on met en contact les extrémités (41, 42, 43) de la ligne, respectivement par leurs parties terminales dénudées avec les broches respectives de raccordement (6, 7, 8), qui font saillie radialement au-delà d'une bride frontale (21), les pointes terminales étant dirigées vers l'extérieur du point de vue radial et parallèlement aux broches, qu'on replie ensuite les broches de raccordement (6, 7, 8), ainsi que les pointes terminales dénudées, qui sont en contact avec les broches, des extrémités (41, 42, 43) de la ligne dans une position axiale vers la seconde bride frontale opposée (22) et que, lors du rabattement du capot basculant (5) maintenu sur la seconde bride frontale (22), on bloque par serrage, en les soulageant de toute contrainte de traction, les extrémités (41, 42, 43) de la ligne, notamment au-dessus de leurs pointes terminales, qui établissent le contact, dans des ouvertures en forme de fentes (51, 52, 53), qui s'ouvrent axialement, du clapet basculant (5).

2. Procédé suivant la revendication 1, caractérisé par le fait qu'on enroule les extrémités (31, 32, 33) de l'enroulement autour des broches de raccordement (6, 7, 8) et qu'on met en contact les extrémités (41, 42, 43) de la ligne, par leurs pointes terminales dénudées respectives, avec les broches respectives de raccordement (6, 7, 8), les pointes terminales étant parallèles aux broches et situées à l'extérieur de ces dernières, du point de vue axial.

3. Procédé suivant la revendication 1 ou 2, caractérisé par le fait qu'on soude les extrémités (31, 32, 33) de l'enroulement et les extrémités (41, 42, 43) de la ligne aux broches de raccordement (6, 7, 8).

4. Procédé suivant la revendication 1 ou 2, caractérisé par le fait qu'on relie les extrémités (31, 32, 33) de l'enroulement et les extrémités (41, 42, 43) de la ligne aux broches de raccordement (6, 7, 8), par soudage par pression.

FIG 1

FIG 2

FIG 3

FIG 4

FIG 5